(19) Europäisches Patentamt
European Patent Office
Office européen des brevets

(11) Veröffentlichungsnummer: **0 065 740**
**A1**

(12) **EUROPÄISCHE PATENTANMELDUNG**

(21) Anmeldenummer: **82104336.1**

(22) Anmeldetag: **18.05.82**

(51) Int. Cl.[3]: **A 01 N 57/22**
//(A01N57/22, 43/24)

(30) Priorität: **22.05.81 DE 3120439**

(43) Veröffentlichungstag der Anmeldung:
**01.12.82 Patentblatt 82/48**

(84) Benannte Vertragsstaaten:
**DE FR GB IT NL**

(71) Anmelder: **HOECHST AKTIENGESELLSCHAFT**
**Postfach 80 03 20**
**D-6230 Frankfurt/Main 80(DE)**

(72) Erfinder: **Waltersdorfer, Anna, Dr.**
**Rauenthaler Weg 28**
**D-6000 Frankfurt am Main 71(DE)**

(72) Erfinder: **Salbeck, Gerhard, Dr.**
**Frankfurterstrasse 34**
**D-6238 Hofheim am Taunus(DE)**

(72) Erfinder: **Knauf, Werner, Dr.**
**Im Kirschgarten 24**
**D-6239 Eppstein/Taunus(DE)**

(54) **Schädlingsbekämpfungsmittel.**

(57) Schädlingsbekämpfungsmittel enthaltend eine Kombination aus einer Verbindung der Formel I,

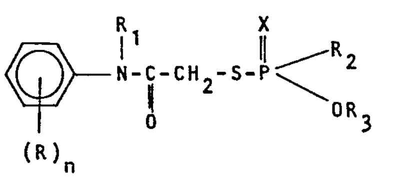

(I)

worin

R gleiche oder verschiedene Reste aus der Gruppe Halogen, ($C_1$-$C_3$)-Alkyl, $NO_2$, $OCH_3$,

$R_1$, $R_2$ und $R_3$ ($C_1$-$C_3$)-Alkyl,

X O, S und

n eine ganze Zahl von 1 - 3

bedeuten, und der Verbindung der Formel II,

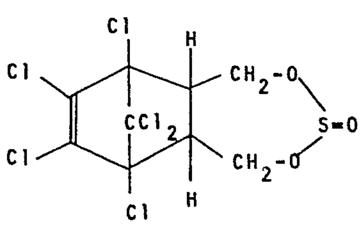

(II)

wobei das Verhältnis der Komponente der Formel I und II 100 : 1 bis 1 : 100 beträgt, deren Verwendung zur Bekämpfung von Insekten und Akariden sowie Verfahren zu deren Verwendung.

EP 0 065 740 A1

Croydon Printing Company Ltd.

Schädlingsbekämpfungsmittel

Gegenstand der Erfindung sind Schädlingsbekämpfungsmittel, insbesondere insektizide und akarizide Mittel, die gekennzeichnet sind durch einen Gehalt an einer Verbindung der Formel I,

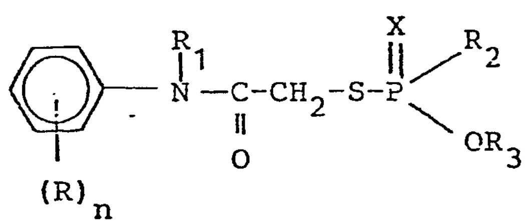

(I)

worin

R gleiche oder verschiedene Reste aus der Gruppe Halogen, $(C_1-C_3)$-Alkyl, $NO_2$, $OCH_3$,

$R_1$, $R_2$ und $R_3$ $(C_1-C_3)$-Alkyl,

X O, S und

n eine ganze Zahl von 1 - 3

bedeuten,

in Kombination mit der Verbindung der Formel II

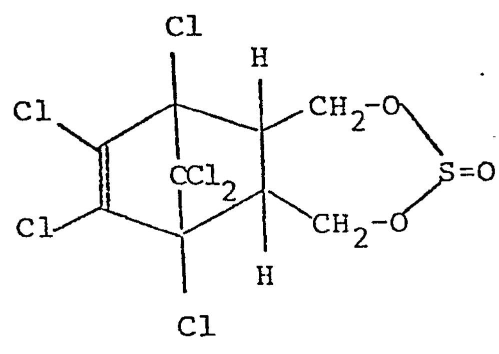

(II)

Bevorzugte Reste in Formel I sind z.B.

R = Cl oder $(C_1-C_3)$-Alkyl,

$R_1$ = Isopropyl,

$R_2$,$R_3$ = Methyl oder Ethyl,

X = S und

n = 1 oder 2.

Bevorzugte Verbindungen der Formel I sind z.B.

Ia: S/N(2-Methyl-phenyl)-N-isopropyl-carbamoylmethyl/-O-äthyl-methyldithiophosphonat,

Ib: S/N(2,5-Dichlorphenyl)-N-isopropyl-carbamoylmethyl/-O-äthyl-methyldithiophosphonat,

Ic: S/N(4-Chlor-phenyl)-N-isopropyl-carbamoylmethyl/-O-äthyl-methyldithiophosphonat,

Id: S/N(3-Methyl-phenyl)-N-isopropyl-carbamoylmethyl/-O-äthyl-methyldithiophosphonat,

Ie: Methandithiophosphonsäure-S/N-(4-methyl-phenyl)-N-isopropylcarbamoylmethyl/-O-äthylester,

If: S/N-Isopropyl-N(2-isopropyl-phenyl)-carbamoyl-methyl/-O-methyl-methyldithiophosphonat.

N-Alkyl-N-aryl-carbamoylmethyl-thiophosphonsäureester bzw. -dithiophosphonsäureester der Formel I, ihre Herstellung und ihre pestizide Wirksamkeit sind z.B. in der DE-OS 26 17 736 beschrieben. Die Verbindungen besitzen eine gute Wirkung gegen Schädlinge der Ordnung Acarina. Ihre Wirkung gegen einige Insektenarten ist jedoch, insbesondere bei niedrigen Wirkstoffkonzentrationen bzw. niedrigen Aufwandmengen, unbefriedigend.

Weiter ist bekannt, daß die Verbindung der Formel II 6,7,8,9,10,10 — Hexachlor-1,5,5a,6,9,9a-hexahydro-6,9-methano-2,4,3-benzo/e/-dioxathiepin-3-oxid; common name: Endosulfan) gute pestizide Eigenschaften besitzt. Die Verbindung und ihre Herstellung sind z.B. in dem DE-Patent 1 01579 beschrieben.

Die Verbindung der Formel II zeigt jedoch unterschiedliche und nicht immer befriedigende Wirksamkeiten gegenüber verschiedenen Insektenarten und Vertretern der Ordnung Acarina und erfordert daher höhere Aufwandmengen gegen solche tierischen Schädlinge.

Der vorliegenden Erfindung lag somit u.a. die Aufgabe

zugrunde, ein Mittel zu finden, welches sowohl gegen Insekten als auch gegen Milben sehr gut pestizid wirksam ist.

Es wurde nun überraschenderweise gefunden, daß bei der kombinierten Anwendung von Verbindungen der Formel I mit der Verbindung der Formel II eine synergistische Wirkung, insbesondere insektizide und akarizide Wirkung, auftritt.

Dabei liegt die insektizide und akarizide Wirksamkeit erfindungsgemäßer Wirkstoffkombinationen aus Verbindungen der Formeln I und II wesentlich höher als die Wirkung der Einzelkomponenten der Formeln I bzw. II und auch erheblich höher als die Summe der Wirkungen der Einzelkomponenten. Sie können daher mit Erfolg im Pflanzenschutz zur Bekämpfung tierischer Schädlinge, insbesondere von Schadinsekten und Milben, verwendet werden.

Das Mischungsverhältnis der Komponenten aus Formel I und Formel II kann erfindungsgemäß innerhalb weiter Grenzen variiert werden und kann zwischen 100:1 bis 1:100 liegen. Vorzugsweise liegt es zwischen 10:1 und 1:10.

Die erfindungsgemäßen Wirkstoffkombinationen eignen sich bei guter Pflanzenverträglichkeit z.B. zur Bekämpfung von tierischen Schädlingen, insbesondere Insekten und Spinnentieren, die in der Landwirtschaft, in Forsten und im Materialschutz vorkommen. Sie sind gegen normal sensible und auch gegen resistente Arten sowie gegen alle oder einzelne Entwicklungsstadien wirksam. Zu den Schädlingen gehören z.B. verschiedene Spinnmilbenarten, beispielsweise die Obstbaumspinnmilbe (Panonychus ulmi), die Citrusspinnmilbe (Panonychus citri) und die Bohnenspinnmilbe (Tetranychus urticae). Schädliche Insekten

mit saugenden und beißenden Mundwerkzeugen, beispielsweise Käfer, wie z.B. der Mexikanische Bohnenkäfer (Epilachna varivestis), Kartoffelkäfer (Leptinotarsa decemlineata), Erdfloh (Phyllotreta spp.), Erdbeerstengelstecher (Coenorrhinus germanicus), Erdbeerblütenstecher (Anthonomus rubi), Baumwollkapselkäfer (Anthonomus grandis), Drahtwürmer (Agriotes spec.). Schmetterlinge und deren Larven, wie der ägyptische und der altweltliche Baumwollkapselwurm (Earias insulana bzw. Heliothis armigera), Tabakknospenwurm (Heliothis virescens), Wickler, insbesondere Apfelwickler (Carpocapsa pomonella), Eichenwickler (Tortrix viridana), Fruchtschalenwickler (Adoxophyes reticulana), Knospenwickler (Hedya nubiferana), Traubenwickler (Eupoecilia ambiguella), Maiszünsler (Ostrinia nubilalis), Erdraupen (Agrotis spec.), Frostspanner (Operophthera brumata), Nonne (Lymantria monacha). Außerdem Fliegen, wie z.B. die Rübenfliege (Pegomya betae), Mittelmeerfruchtfliege (Ceratitis capitata) und Schaben, wie z.B. die Deutsche Schabe (Blatta germanica) und die orientalische Schabe (Blatta orientalis) sowie Blattläuse, wie z.B. die Schwarze Bohnenlaus (Doralis fabae), Grüne Pfirsischblattlaus (Myzus persicae), Baumwollblattlaus (Aphis gossypii) und Wanzen, z.B. Baumwollwanzen (Oncopeltus fasciatus und Dysdercus spp.).

Die Wirkstoffkombinationen können in die üblichen Formulierungen übergeführt werden, wie Lösungen, Emulsionen, Suspensionen, Dispersionen, Pulver, Schäume, Pasten, Granulate, Aerosole, Wirkstoff-imprägnierte Natur- und synthetische Stoffe. Feinstverkapselungen in polymeren Stoffen und in Hüllmassen für Saatgut, ferner in Formulierungen mit Brennsätzen, wie Räucherpatronen-, -dosen, -spiralen u. ä., sowie ULV-Kalt- und Warmnebel-Formulierungen.

Der Gesamtwirkstoffgehalt der marktfähigen Formulierungen beträgt im allgemeinen etwa 0,1 bis 95 Gew.-%, vorzugsweise 2 bis 80 Gew.-%. Der Rest zu 100 Gew.-% besteht aus üblichen Formulierungshilfsmitteln wie Haft-, Emulgier-, Netz-, Dispergier-, Füll-, Trägerstoffen und Lösungsmitteln.

Die erfindungsgemäßen Kombinationen können als Tankmischungen, bei denen die einzeln formulierten Wirkstoffe erst unmittelbar vor der Applikation vermischt werden, oder als Fertigformulierungen zur Anwendung gebracht werden.
Fertigmischungen, beispielsweise in Form von Spritzpulvern (benetzbare Pulver), emulgierbaren Konzentraten, Dispersionen, Stäubemitteln, Granulaten oder versprühbaren Lösungen enthalten die üblichen Formulierungshilfsstoffe wie Netz-, Emulgier-, Haft-, Dispergiermittel, feste oder flüssige Inertstoffe, Trägerstoffe, Mahlhilfsmittel und Lösungsmittel.

Die Formulierungen der Wirkstoffe bzw. der Wirkstoffkombinationen können in bekannter Weise hergestellt werden, z.B. durch Vermischen oder Vermahlen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, wie z.B. Emulgiermitteln, Dispergiermitteln und schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen z.B. in Frage: Aromaten wie Xylol, Toluol oder Alkylnaphthaline, chlorierte Aromaten oder chlorierte aliphatische Kohlenwasserstoffe wie Chlorbenzole, Chloräthylene oder Methylenchlorid, aliphatische Kohlenwasserstoffe wie Cyclohexan oder Paraffine, z.B. Erdölfraktionen, Alkohole wie Butanol oder Glycol sowie deren Äther und Ester, Ketone wie Aceton, Methyläthylketon, Methylisobutylketon oder Cyclohexanon, stark polare Lösungsmittel wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgas wie Halogenkohlenwasserstoffe sowie Butan, Propan, Stickstoff und Kohlendioxid; als feste Trägerstoffe kommen z.B. in Frage: natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen z.B. in Frage: gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier- oder schaumerzeugende Mittel kommen z.B. in Frage: nichtionogene und anionische Emulgatoren, wie Polyoxyäthylen-Fettsäure-Ester, Polyoxyäthylen-Fettalkohol-Äther, Alkylarylpolyglykol-äther, Alkylsulfonate, Alkylsulfate, Arylsulfonate sowie Eiweißhydrolysate; als Dispergiermittel kommen z.B. in Frage: Ligninsulfonate aus Sulfitablaugen sowie Methylcellulose.

Es können in den Formulierungen Haftmittel, wie z.B. Carboxymethylcellulose, natürliche und synthetische pulverige, körnige oder latexförmige Polymere verwendet werden, beispielsweise Gummiarabicum, Polyvinylalkohol, Polyvinylacetat.

Außerdem können Farbstoffe, wie z.B. anorganische Pigmente, beispielsweise Eisenoxid, Titanoxid, Ferrocyanblau und organische Farbstoffe, wie z.B. Alizarinfarbstoffe, Azofarbstoffe und Metallphthalocyaninfarbstoffe, ferner Spurennährstoffe, wie z.B. Salze von Eisen, Mangan, Bor, Kupfer, Kobalt, Molybdän und Zink

verwendet werden.

Spritzpulver sind in Wasser gleichmäßig dispergierbare Präparate, die neben dem Wirkstoff außer einem Verdünnungs-, Träger- oder Inertstoff noch Netzmittel, z.B. polyoxethylierte Alkylphenole, polyoxethylierte Fettalkohole, Alkyl- oder Alkylphenyl-sulfonate, und Dispergiermittel, z.B. ligninsulfonsaures Calcium, 2,2'-dinaphthylmethan-6,6'-disulfonsaures Natrium, dibutylnaphthalinsulfonsaures Natrium oder auch oleoylmethyltaurinsaures Natrium enthalten.

Emulgierbare Konzentrate werden beispielsweise durch Auflösen des Wirkstoffes in einem organischen Lösungsmittel, z.B. Butanol, Cyclohexanon, Dimethylformamid, Xylol oder auch höhersiedenden Aromaten oder Kohlenwasserstoffen unter Zusatz von einem oder mehreren Emulgatoren hergestellt. Als Emulgatoren können beispielsweise verwandt werden:
Alkylarylsulfonsaure Calziumsalze wie Ca-dodecylbenzolsulfonat, nichtionische Emulgatoren wie Fettsäurepolyglykolester, Alkylarylpolyglykolether, Fettalkoholpolyglykolether, Propylenoxid-Ethylenoxid-Kondensationsprodukte, Fettalkohol-Propylenoxid-Ethylenoxid-Kondensationsprodukte, Alkylpolyether, Sorbitanfettsäureester, Polyoxethylen-sorbitan-fettsäureester, Polyoxethylensorbitester, Alkylaryl-Propylenoxid-Ethylenoxid-Kondensationsprodukte u.a..

Stäubemittel erhält man z.B. durch Vermahlen des Wirkstoffes mit fein verteilten, festen Stoffen, z.B. Talkum, natürlichen Tonen, wie Kaolin, Bentonit, Pyrophillit oder Diatomeenerde.

Granulate können z.B. entweder durch Verdüsen einer Lösung des Wirkstoffes auf adsorptionsfähiges, granuliertes Inertmaterial hergestellt werden, oder durch Aufbringen von Wirkstoffkonzentraten mittels Klebemitteln, z.B. Polyvinylalkohol, polyacrylsaurem Natrium

oder auch Mineralölen auf die Oberfläche von Trägerstoffen, wie Sand, Kaolinite, oder von granuliertem Inertmaterial. Auch können geeignete Wirkstoffe in der für die Herstellung von Düngemittelgranalien üblichen Weise - gewünschtenfalls in Mischung mit Düngemitteln - granuliert werden.

Bei pestiziden Mitteln können die Konzentrationen der Wirkstoffe in den handelsüblichen Formulierungen verschieden sein.

In Spritzpulvern kann z.B. die Gesamt-Wirkstoffkonzentration im Bereich von etwa 10 bis 80 Gew.-% variieren, der Rest zu 100 Gew.-% besteht aus den oben angegebenen Formulierungszusätzen. Bei emulgierbaren Konzentraten kann die Wirkstoffkonzentration gleichfalls etwa 10 bis 80 Gew.-% betragen. Staubförmige Formulierungen enthalten meistens 2 bis 20 Gew.-% an Wirkstoff, versprühbare Lösungen etwa 2 - 20 Gew.-%. Bei Granulaten hängt der Wirkstoffgehalt zum Teil davon ab, ob die wirksame Verbindung flüssig oder fest vorliegt und welche Granulierhilfsmittel, Füllstoffe usw. verwendet werden. Er beträgt im allgemeinen etwa 0,5 bis 30 Gew.-%.

Zur Anwendung werden die handelsüblichen Konzentrate gegebenenfalls in üblicher Weise verdünnt, z.B. bei benetzbaren Pulvern und emulgierbaren Konzentraten mittels Wasser. Staubförmige und granulierte Zubereitungen sowie versprühbare Lösungen werden vor der Anwendung im allgemeinen nicht mehr mit weiteren inerten Stoffen verdünnt. Die Anwendungskonzentrationen an erfindungsgemäßen Wirkstoffkombinationen in den Applikationszubereitungen variieren wie üblich mit den äußeren Bedingungen wie z.B. Anwendungsart, den Klimabedingungen, insbesondere Temperatur und Feuchtigkeit, sowie gegebenenfalls der Kulturpflanzen-Art bzw. Größe. Sie können innerhalb weiter Grenzen schwanken und betragen in den üblichen Anwendungsformen etwa 0,005 bis 20 Gew.-%,

vorzugsweise 0,01 bis 10 Gew.-% Wirkstoffkombination. Es sind auch höhere Wirkstoffkonzentrationen möglich, wobei aber gegebenenfalls nur geringe technische oder wirtschaftliche Vorteile erwartet werden können.

Bei der Anwendung z.B. auf landwirtschaftlichen Bodenflächen beträgt die Aufwandmenge an erfindungsgemäßer Wirkstoffkombination etwa 0,3 bis 30 kg/ha, vorzugsweise 1 bis 11 kg/ha.

Die erfindungsgemäßen Wirkstoffkombinationen können auch zusammen mit anderen Schädlingsbekämpfungsmitteln, wie z.B. Insektiziden, Fungiziden oder Herbiziden ausgebracht bzw. den zu schützenden Substraten beigemischt werden, und zwar sowohl im Gemisch als auch nacheinander. Auch die kombinierte Ausbringung mit Düngemitteln ist möglich.

Die Erfindung wird durch die nachfolgenden Beispiele näher erläutert, ohne sich jedoch auf diese zu beschränken.

## A. FORMULIERUNGSBEISPIELE

### Beispiel 1

Ein emulgierbares Konzentrat wird erhalten aus

15 Gew.-Teilen Wirkstoffgemisch aus Verbindungen der Formeln I und II
75 Gew.-Teilen Cyclohexanon
und 10 Gew.-Teilen oxethyliertes Nonylphenol (10 AeO)[+]

+) Anzahl AeO = Anzahl Ethylenoxideinheiten im Polyglykoletherrest

### Beispiel 2

Ein in Wasser leicht dispergierbares benetzbares Pulver wird erhalten, indem man

25 Gew.-Teile Wirkstoffgemisch [++)] aus Verbindungen der Formeln I und II
64 Gew.-Teile kaolinhaltigen Quarz
10 Gew.-Teile ligninsulfonsaures Calcium
und 1 Gew.-Teil oleoylmethyltaurinsaures Natrium

mischt und in einer Stiftmühle mahlt.

++) Die Einzelwirkstoffe aus den Verbindungen der Formeln I und II können auch getrennt formuliert und anschließend vermischt oder zusammen vermahlen werden.

### Beispiel 3

Ein Stäubemittel wird erhalten, indem man

10 Gew.-Teile Wirkstoffgemisch ++) aus Verbindungen der Formeln I und II
und 90 Gew.-Teile Talkum

mischt und in einer Schlagmühle zerkleinert.

Beispiel 4

Ein Granulat wird erhalten durch Granulieren einer Mischung aus

2 - 25 Gew.-Teilen Wirkstoffgemisch ++) aus Verbindungen der Formeln I und II
und 98 - 85 Gew.-Teilen inerten Granulatmaterialien, wie Attapulgit, Bimsstein, Quarzsand.

++) Die Einzelwirkstoffe aus den Verbindungen der Formeln I und II können auch getrennt formuliert und anschließend vermischt oder zusammen vermahlen werden.

## B. BIOLOGISCHE BEISPIELE

Beispiel I

Zur Bestimmung der biologischen Wirksamkeit der Einzelsubstanzen und der Kombinationen werden die an den Schädlingen ermittelten $LC_{50}$-Werte herangezogen. Dabei bedeutet $LC_{50}$ die Konzentration an Wirkstoff bzw. Wirkstoffgemisch in Gew.-% in der Spritzbrühe bzw. Lösung bzw. Applikationszubereitung, die erforderlich ist, um 50 % der Testschädlinge abzutöten (= letale Wirkstoff-Konzentration mit 50 %igem Abtötungseffekt). Die hierzu benötigten Werte werden jeweils aus einem Dosis-Wirkungsdiagramm im Wahrscheinlichkeitsnetz nach der Auftragung der

ermittelten Mortalitätswerte und der Konstruktion einer Regressionsgeraden abgelesen. Die Wirksamkeit der Kombination aus 2 Komponenten wird nach der Methode von Yun-Pei Sun und E.R. Johnson, Journ. Econ.Entomol., 1960, Vol 53, 5; 887 - 892 bestimmt.

Hierzu wird der Koeffizient der Co-Toxizität der Mischung unter Heranziehung der folgenden Formel errechnet:

$$\text{Koeffizient} = \frac{\text{tatsächl. Tox. index d. Mischung}}{\text{theoret. Tox. index d. Mischung}} \times 100$$

Ein Koeffizient der Cotoxizität der Mischung nahe dem Wert 100 zeigt eine additive Wirkung beider Substanzen an; ein Koeffizient kleiner als 100 zeigt Antagonismus, ein Koeffizient größer als 100 Synergismus an.

Mit Kundebohnenblattläusen (Aphis craccivora) stark besetzte Ackerbohnen (Vicia faba) werden mit wäßrigen Suspensionen von Spritzpulvern der in Tabelle I angegebenen Einzelwirkstoffe bzw. Wirkstoffkombination (WS) in Verdünnungsreihen bis zum Stadium des beginnenden Abtropfens behandelt und nach dem Antrocknen des Spritzbelages im Gewächshaus bei 20 ± 3°C aufgestellt. Die Bestimmung der Mortalität der Kundebohnenblattläuse erfolgt 3 Tage nach der Behandlung. Aus den erhaltenen Werten werden jeweils die $LC_{50}$-Werte (= % WS in der Spritzbrühe) ermittelt und der Koeffizient der Cotoxizität für die Mischung nach Yun-Pei Sun et al. errechnet. Die Ergebnisse sind in der nachstehenden Tabelle I zusammengefaßt wiedergegeben.

Tabelle I:

| Wirkstoffe +) | $LC_{50}$ (Gew.-% WS) | Koeffizient der Cotoxizität |
|---|---|---|
| Verbindung If | 0,0016 | |
| Verbindung II | 0,0009 | |
| Verbindungen If + II Gew.-Verh. 1:1 | 0,001 | 115 |

+) Verbindung If: S/N-Isopropyl-N(2-isopropyl-phenyl)-carbamoylmethyl/-O-methyl-methyl-dithiophosphonat,

Verbindung II: Endosulfan

Wie aus der letzten Spalte in Tabelle I ersichtlich, ist der Koeffizient der Cotoxizität bei der Mischung größer als 100, d.h., es liegt ein Synergismus vor.

Beispiel II

Mit Bohnenspinnmilben (Tetranychus urticae) stark befallene Bohnenpflanzen werden mit wäßrigen Verdünnungen von Emulsionskonzentraten der in Tabelle II angegebenen Einzelwirkstoffe bzw. Wirkstoffkombinationen (WS) in Verdünnungsreihen bis zum Stadium des beginnenden Abtropfens behandelt und nach dem Antrocknen des Spritzbelages im Gewächshaus bei 20 ± 3°C aufgestellt. Die Bestimmung der Mortalität der Bohnenspinnmilben erfolgt 8 Tage nach der Behandlung. Die Ermittlung der $LC_{50}$-Werte (= % WS in der Spritzbrühe) und der Koeffizienten der Cotoxizität für die Mischungen erfolgt analog Beispiel I. Die Ergebnisse sind in der nachstehenden Tabelle II zusammengefaßt wiedergegeben.

Tabelle II:

| Wirkstoffe +) | $LC_{50}$ (Gew.-% WS) | Koeffizient der Cotoxizität |
|---|---|---|
| Verbindung Ic | 0,00044 | |
| Verbindung If | 0,0008 | |
| Verbindung II | 0,15 | |
| Verbindungen Ic + II Gew.-Verh. 1:1 | 0,0007 | 125 |
| Verbindungen If + II Gew.-Verh. 1:1 | 0,0009 | 177 |

+) Verbindungen If und II vgl. Tabelle I;
Verbindung Ic: S/N(4-Chlor-phenyl)-N-isopropyl-carbamoylmethyl7-O-äthyl-methyldithiophosphonat.

Wie aus der letzten Spalte in Tabelle II ersichtlich, liegen die Koeffizienten der Cotoxizität bei den Mischungen deutlich über 100, d.h., es liegt ein Synergismus vor.

Beispiel III

Auf die Innenseiten des Deckels und des Bodens von Petrischalen werden jeweils 1ml wäßrige Verdünnungen von Emulsionskonzentraten der in Tabelle III angegebenen Einzelwirkstoffe bzw. Wirkstoffkombination (WS) in Verdünnungsreihen gleichmäßig aufgetragen und der Belag abtrocknen lassen. Danach werden jeweils 10 Larven ($L_4$) der Deutschen Schabe (Blatella germanica) in die Schalen gesetzt, die Schalen mit den zugehörigen Deckeln verschlossen und nach 72 Stunden der Grad der Abtötung in % ermittelt. Die Bestimmung der $LC_{50}$-Werte (= % WS in der wäßrigen

Emulsion) und des Koeffizienten der Cotoxizität für die Mischung erfolgt analog Beispiel I. Die Ergebnisse sind in der nachstehenden Tabelle III zusammengefaßt wiedergegeben.

Tabelle III:

| Wirkstoffe +) | $LC_{50}$ (Gew.-% WS) | Koeffizient der Cotoxizität |
|---|---|---|
| Verbindung If | 0,012 | |
| Verbindung II | 0,0014 | |
| Verbindungen If + II Gew.-Verh. 8:1 | 0,0022 | 296,3 |

+) vgl. Tabelle I.

Wie aus der letzten Spalte in Tabelle III ersehen werden kann, liegt der Koeffizient der Cotoxizität bei der Mischung erheblich über 100, d.h., es liegt ein Synergismus vor.

Beispiel IV

Aus Emulsionskonzentraten der in Tabelle IV angegebenen Einzelwirkstoffe bzw. Wirkstoffkombination (WS) hergestellte wäßrige Verdünnungsreihen werden in Mengen entsprechend einer Aufwandmenge von jeweils 600 l Spritzbrühe/ha auf Blätter der Baumwolle gesprüht und abtrocknen gelassen. Anschließend werden die Blätter pro Versuch mit 10 Stück Raupen (L 3-4) des gemeinen Baumwollwurms (Prodenia litura) besetzt, die zuvor mit jeweils den gleichen wäßrigen Wirkstoffverdünnungen wie die Blätter behandelt und abtrocknen gelassen worden sind. Blätter und Raupen werden zusammen in Beobachtungskäfige gegeben und nach 48 Stunden

der Grad der Abtötung in % ermittelt. Die Bestimmung der $LC_{50}$-Werte (= % WS in der wäßrigen Emulsion) und des Koeffizienten der Cotoxizität für die Mischung erfolgt analog Beispiel I. Die Ergebnisse sind in der nachstehenden Tabelle IV zusammengefaßt wiedergegeben.

Tabelle IV:

| Wirkstoffe +) | $LC_{50}$ (Gew.-% WS) | Koeffizient der Cotoxizität |
|---|---|---|
| Verbindung If | 0,032 | |
| Verbindung II | 0,0036 | |
| Verbindungen If + II Gew.-Verh. 8:1 | 0,0095 | 179,5 |

+) vgl. Tabelle I.

Wie aus der letzten Spalte in Tabelle IV ersichtlich, liegt der Koeffizient der Cotoxizität bei der Mischung deutlich über 100, d.h., es liegt ein Synergismus vor.

PATENTANSPRÜCHE:

1. Schädlingsbekämpfungsmittel, gekennzeichnet durch einen Gehalt an einer Verbindung der Formel I,

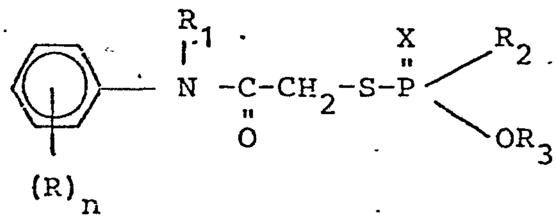

(I)

worin

R gleiche oder verschiedene Reste aus der Gruppe Halogen, $(C_1-C_3)$-Alkyl, $NO_2$, $OCH_3$,

$R_1$, $R_2$ und $R_3$ $(C_1-C_3)$-Alkyl,

X O, S und

n eine ganze Zahl von 1 - 3

bedeuten,

in Kombination mit einer Verbindung der Formel II

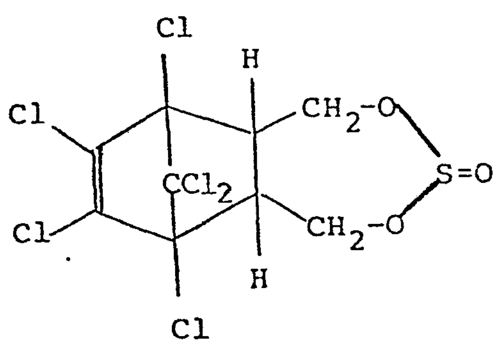

(II)

2. Schädlingsbekämpfungsmittel gemäß Anspruch 1, dadurch gekennzeichnet, daß das Mischungsverhältnis der Komponenten der Formeln I und II 100:1 bis 1:100, vorzugsweise 10:1 bis 1:10 beträgt.

3. Schädlingsbekämpfungsmittel nach Ansprüchen 1 oder 2, dadurch gekennzeichnet, daß in Formel I

R = Cl oder $(C_1-C_3)$-Alkyl,
$R_1$ = Isopropyl,
$R_2$,$R_3$ = Methyl oder Ethyl,
X = S und
n = 1 oder 2
bedeuten.

4. Schädlingsbekämpfungsmittel, gekennzeichnet durch einen Gehalt von 0,1 bis 95 Gew.-% an einer Wirkstoffkombination aus Verbindungen der Formeln I und II gemäß Ansprüchen 1 bis 3 sowie üblichen Formulierungshilfsmitteln.

5. Verwendung der Mittel gemäß Ansprüchen 1 bis 4 zur Bekämpfung von Insekten und Milben.

6. Verfahren zur Bekämpfung von Schadinsekten und Milben, dadurch gekennzeichnet, daß man diese oder deren Lebensraum mit insektizid und akarizid wirksamen Mengen einer Wirkstoffkombination gemäß Ansprüchen 1 bis 4 behandelt.

7. Verfahren nach Anspruch 6, dadurch gekennzeichnet, daß man die Behandlung mit einer Applikationskonzentration von 0,005 bis 20 Gew.-% bzw. einer Applikationsmenge von 0,3 bis 30 kg/ha an Wirkstoffkombination durchführt.

0065740

Europäisches Patentamt

# EUROPÄISCHER RECHERCHENBERICHT

Nummer der Anmeldung

EP 82 10 4336

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | US-A-4 152 428 (G. SALBECK et al.)<br>& DE - A - 2 617 736 (Cat. D) & FR - A - 2 361 067<br>--- | 1-7 | A 01 N 57/22 //<br>(A 01 N 57/22<br>A 01 N 43/24 ) |
| A | C.R. WORTHING: "The pesticide manual", 6. Edition, 1979, pages 231-232, B.C.P.C. Publications, Croydon, G.B.<br>----- | 1-7 | |
| | | | RECHERCHIERTE SACHGEBIETE (Int. Cl. 3) |
| | | | A 01 N |

Der vorliegende Recherchenbericht wurde für alle Patentansprüche erstellt.

| Recherchenort | Abschlußdatum der Recherche | Prüfer |
|---|---|---|
| DEN HAAG | 19-08-1982 | DECORTE D. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82